(19) Europäisches Patentamt
European Patent Office
Office européen des brevets

(11) **EP 1 571 429 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(51) Int Cl.:
*G01G 19/10* [(2006.01)]   *G01G 23/01* [(2006.01)]
*B60G 17/052* [(2006.01)]   *B60G 17/015* [(2006.01)]

(21) Anmeldenummer: **04028930.8**

(22) Anmeldetag: **07.12.2004**

(54) **Achslastanzeigevorrichtung**

Device for displaying the axle load.

Dispositif indicateur de la charge à l'essieu.

(84) Benannte Vertragsstaaten:
**DE FR IT SE**

(30) Priorität: **04.03.2004 DE 102004010559**

(43) Veröffentlichungstag der Anmeldung:
**07.09.2005 Patentblatt 2005/36**

(73) Patentinhaber: **WABCO GmbH**
**30453 Hannover (DE)**

(72) Erfinder:
• **Barghoorn, Edzard**
**26725 Emden (DE)**
• **Gocz, Reinhard**
**30926 Seelze (DE)**

• **Jovers, Ingo**
**30898 Gehrden (DE)**
• **Kleen, Berend**
**30161 Hannover (DE)**

(74) Vertreter: **Schrödter, Manfred et al**
**WABCO GmbH**
**Postfach 91 12 62**
**30432 Hannover (DE)**

(56) Entgegenhaltungen:
**EP-A- 1 167 094    WO-A-01/76897**
**DE-A1- 3 906 987    JP-A- 4 161 827**
**US-A- 4 651 838**

EP 1 571 429 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung für die Anzeige [und zur Steuerung] der Achslast von Fahrzeugen entsprechend dem Oberbegriff des Patentanspruchs 1.

Eine derartige Achslast-Anzeigevorrichtung ist aus der EP 0 666 468 B1 bekannt (im weiteren mit D1 bezeichnet).

Bei der bekannten Achslast-Anzeigevorrichtung sind die Fahrzeug-Federaggregate z. B. als pneumatische Verdrängeraggregate ausgebildet, deren Druck zur Erhaltung eines beladungsunabhängig vorgegebenen Bodenabstandes beladungsabhängig steuerbar ist, wobei den Verdrängeraggregaten zugeordnete Druckmessaufnehmer und/oder den Federaggregaten zugeordnete Wegaufnehmer zur Steuerung der Achslastanzeige vorgesehen sind. Die Anzeige erfolgt unter Verwendung einer Rechenelektronik auf der Basis einer vorgegebenen Korrelation zwischen Druck bzw. Hub einerseits und Achslast andererseits. Der angezeigte Wert ist durch Betätigung einer Justagehandhabe veränderbar; bei einer solchen Änderung ist die vor der Veränderung vorhandene Korrelation nach vorbestimmten Kriterien - insbesondere unter Berücksichtigung typischer Alterungsprozesse - automatisch veränderbar, vorzugsweise derart, dass bei einer Änderung im Bereich geringer Achslasten eine andere Abänderung der Korrelation als bei einer Änderung im Bereich höherer Achslasten erfolgt. Die Achslast-Anzeige dieser Schrift beruht also auf der erläuterten Korrelation in Bezug auf den einen vorgegebenen Bodenabstand, der durch die entsprechende Steuerung der Verdrängungsaggregate beladungsunabhängig eingehalten wird.

Aus der DE 39 06 987 C2 (im weiteren mit D2 bezeichnet) ist eine Ladegewichtsanzeigeanordnung für ein luftgefedertes Fahrzeug bekannt, bei der durch mechanische Betätigung eines pneumatischen Niveauregelventils ein vorbestimmter vertikaler Abstand zwischen dem Fahrzeugrahmen und dem Fahrzeuggestell mit den Rädern aufrechterhalten wird; das Niveauregelventil bewirkt die Einspeisung eines diesem Abstand entsprechenden Druckes in Luftfederbälge, die zwischen dem Fahrzeugrahmen und dem Fahrgestell angeordnet sind, und die den Fahrzeugrahmen federnd abstützen. Die Ladegewichtsanzeige ist zur Verwendung in Fahrzeugen mit unterschiedlich großen Luftbälgen ausgebildet; sie berücksichtigt, dass der Umwandlungsfaktor zwischen dem Ladegewicht und dem Luftdruck (Ladegewicht-Druck- Beziehung) von der Fläche der die Ladung tragenden Luftbälge abhängt. Hierzu sind in einem elektrischen PROM-Speicher mehrere Gewichtstabellen mit diesen Umwandlungsfaktoren für unterschiedlich große Luftbälge mit ihrem unterschiedlich großen Flächeninhalt gespeichert. Der Fahrzeugführer gibt über einen Tabellenwählschalter die zu verwendende Gewichtstabelle vor, die zur Teiladressierung des PROM-Speichers verwendet wird. Im PROM-Speicher sind weiter Suchtabellen enthalten, welche geeignet sind, den Wert der Adresse in Druckdaten umzuwandeln. Zur Ladegewichtsanzeige wird der Luftdruck in einem Luftbalg über einen Drucksensor gemessen, das gemessene Gleichspannungspegel-Signal wird über einen Analog-/Digital-Wandler in ein digitales Signal umgewandelt und dieses Digitalsignal dient zusammen mit der Fahrer-Tabellenwahl zur Adressierung des PROM-Speichers und der durch diese Adressvorgabe ausgewählte Speicherinhalt des PROM-Speichers wird auf einer Anzeigevorrichtung für den Fahrer visuell als Wert des Ladegewichtes dargestellt.

Die bekannten Achslastanzeige-Vorrichtungen zeigen die Achslast korrekt an, wenn sich der Fahrzeugaufbau (gefederter Teil des Fahrzeugs) im Bezug auf die Fahrzeugachsen (ungefederter Teil des Fahrzeugs) in demjenigen Normalniveau befindet, für das die Anzeige kalibriert ist; bei allen anderen Niveauhöhen zeigt die Anzeige nicht diesen korrekten Wert an.

Bei Niveauregelanlagen hat es sich als vorteilhaft herausgestellt, nicht nur eine, sondern mehrere "Normalhöhen" wahlweise vorzusehen, so werden z. B. drei unterschiedliche Niveauhöhen für den Fahrbetrieb vorgesehen, die vom Fahrer über eine Wähleinrichtung z. B. in Abhängigkeit vom Straßenzustand einstellbar sind. Gründe für eine Veränderung der Fahr-Niveauhöhe sind z. B. der Bedarf einer Niveauerhöhung bei einer schlechten Wegstrecke oder der Wunsch einer Niveauabsenkung bei einer Autobahnfahrt mit dem Ziel der Kraftstoffeinsparung durch die Verringerung des Luftwiderstandes.

Das Dokument US4651838 beschreibt ein Verfahren und ein System zur Ermittlung der Beladung eines Fahrzeuges mit einer Luftfederungsanlage, wobei die Beladung ohne die Auswertung von Höhensensor-Signalen bestimmt wird. Die FahrzeugBeladung wird aufgrund von Druckveränderungen über der Zeit während eines vorbestimmten Regelvorganges ermittelt. Aus der Steigung der Druckveränderung über der Zeit wird auf die Fahrzeugbeladung geschlossen. Die so bestimmte Beladung kann dem Fahrzeugführer an der Instrumententafel angezeigt werden.

Das Dokument WO2001/76897A1 beschreibt ein Verfahren zur Bestimmung der statischen und der dynamischen Radaufstandskraft eines Kraftfahrzeugrades, dem eine Luftfeder zugeordnet ist. Die stationäre Radaufstandskraft wird aus dem Produkt der wirksamen Querschnittsfläche der Luftfeder und dem Druck in der Luftfeder berechnet. Die dynamische Radaufstandskraft wird aus dem Produkt der Federsteifigkeit der Luftfeder und der Auslenkung der Luftfeder aus ihrer Ruhelage berechnet. Zur Bestimmung der Gesamt-Radaufstandskraft werden die stationäre und die dynamische Radaufstandskraft addiert.

Das Dokument JP04161827AA beschreibt ein Verfahren zur Ermittlung der Radaufstandskraft an einem Rad eines Fahrzeuges, welches mit einer Luftfeder ausgestattet ist. Die Radaufstandskraft an diesem Rad wird aus dem Produkt des Druckes in der Luftfeder und der höhenabhängigen Querschnittsfläche der Luftfeder bestimmt.

Das Dokument EP1167094A1 beschreibt eine Vorrichtung zur Ermittlung der von einer Luftfeder übertragenen Kraft, wobei diese Kraft aus dem Produkt des Druckes innerhalb der Luftfeder und der höhenabhängigen wirksamen Querschnittsfläche der Luftfeder ermittelt wird. Im Fall der Berechnung einer Überlast an einer Radposition kann eine visuelle oder akustische Warnung abgegeben werden.

Für einen Fahrer ist es beim Umschalten von einer auf eine andere Fahr-Niveauhöhe doch sehr irritierend, wenn er feststellt, dass sich die Achslastanzeige verändert, obwohl sich an der Beladung des Fahrzeugs während der Fahrt ja offensichtlich nichts geändert hat. Dies führt sicher auch dazu, dass generell kein richtiges Zutrauen zu den Ablesewerten entsteht.

Besonders gravierend ist jedoch eine nicht richtige Achslastanzeige beim Beladen des Fahrzeugs, wenn über die Niveauregelanlage das Niveau der Fahrzeugpritsche manuell auf die Höhe der Laderampe eingestellt wird und ein Be- bzw. Entladen z. B. mithilfe eines Gabelstaplers erfolgt. Beim Beladen ist deshalb eine genaue Achslastanzeige erforderlich, um ein Überladen zu verhindern (die Zuladung bestimmt den vom Benutzer des Fahrzeugs überhaupt beeinflussbaren Teil der Achslast).

Der Erfindung liegt deshalb die Aufgabe zugrunde, eine Achslastanzeige der bekannten Art derart weiterzubilden, dass sie bei jeder Niveauhöhe einen korrekten, der wirklichen Beladung der zugehörigen Achse entsprechenden Wert anzeigt.

Diese Aufgabe wird durch die im Patentanspruch 1 angegebene Erfindung gelöst; Weiterbildungen und vorteilhafte Ausführungsbeispiele der Erfindung sind in den Unteransprüchen angegeben.

Die Erfindung hat den Vorteil, dass auch die sich bei einer Niveauhöhenveränderung ändernde Hub-/Tragkraft-Charakteristik der Luftfederbälge bei der Bestimmung der Anzeigewerte berücksichtigt ist.

Eine Weiterbildung der Erfindung hat den Vorteil, dass unterschiedliche Hub-/Tragkraft-Kennlinien von unterschiedlichen Balgkonstruktionen berücksichtigt werden können.

Die Erfindung wird im folgenden anhand eines Ausführungsbeispiels, das in der Zeichnung dargestellt ist, näher erläutert.

Es zeigen:

Fig. 1    eine Kalibrierflächen-Korrekturfunktion über dem aktuellen Ist-Niveau des Fahrzeugaufbaus;

Fig. 2    eine messtechnisch ermittelte Achslastkennlinie für die Luftfederbälge einer Achse;

Fig. 3    den Aufbau von zwei typischen Arten von Luftfederbälgen.

Die Erfindung bezieht sich auf ein Straßenfahrzeug, bei dem sich ein gefederter Fahrzeugaufbau auf mindestens einer Fahrzeugachse federnd abstützt und bei dem für mindestens eine Fahrzeugachse eine Vorrichtung zur Achslastanzeige für die Anzeige der vom Fahrzeugaufbau auf eine Anzeige-Fahrzeugachse, nämlich der zur Anzeige ausgewählten Fahrzeugachse, wirkenden Gewichtskraft vorgesehen ist.

Das Straßenfahrzeug ist vorzugsweise als Nutzfahrzeug ausgebildet, jedoch ist die Erfindung auch auf Personenkraftwagen anwendbar. Bei Nutzfahrzeug-Anwendungen ist das Fahrzeug z. B. als 4x2 Zugfahrzeug oder als Auflieger-Anhängefahrzeug beispielsweise der schweren Fahrzeugklasse ausgebildet. Das Straßenfahrzeug ist mit einer Luftfederung ausgerüstet und für die mindestens eine Fahrzeugachse mit einer Achslastanzeige-Vorrichtung ist mindestens ein Luftfederbalg vorgesehen, welcher den Fahrzeugaufbau über den Fahrzeugachsen abstützt.

Ist das Fahrzeug z. B. wie erwähnt als 4x2 Zugfahrzeug ausgebildet, so kann dieses Fahrzeug als Vollluftgefedertes Fahrzeug ausgebildet sein, bei dem für die Vorderachse ein Luftfederbalg und für die Hinterachse (Antriebsachse) z. B. zwei Luftfederbälge vorgesehen sind; alternativ kann ein derartiges 4x2 Zugfahrzeug nur mit einer Teilluftfederung ausgerüstet sein, und dann ist üblicherweise an der Vorderachse eine Stahlfeder und an der Hinterachse eine Luftfederung mit z. B. zwei Luftfederbälgen vorgesehen. Auflieger-Anhängefahrzeuge sind mit mindestens einer Fahrzeugachse ausgerüstet, und für diese Achse ist eine Luftfederung mit ebenfalls mindestens einem Luftfederbalg vorgesehen; neben dieser einen Achse können weitere Achsen z. B. als Schlepp- oder Liftachsen vorgesehen sein. Deichsel-Anhängefahrzeuge verfügen mindestens über zwei Fahrzeugachsen, von denen im Sinne der vorstehenden Erläuterung mindestens eine Achse mit einer Luftfederung und mindestens einem Luftfederbalg ausgerüstet ist; diese Aussagen lassen sich sinngemäß auch auf Pkw übertragen.

Für die in einem Fahrzeug installierten luftgefederten Achsen, insbesondere für die mindestens eine Anzeige-Fahrzeugachse, ist eine Niveauregeleinrichtung vorgesehen, durch welche ein Sollniveau, nämlich ein vorgegebener Abstand zwischen der Achse und dem Fahrzeugaufbau, als Ist-Niveau eingehalten ist. Diese Niveauregeleinrichtung kann als mechanische Niveauregeleinrichtung ausgebildet sein, bei der z. B. eine zwischen Achse und Aufbau angeordnete mechanische Vorrichtung ein mechanisch betätigbares Luftfederventil derart steuert, dass in dem mindestens einen Luftfederbalg beladungsunabhängig jeweils ein Druck eingespeist wird, der den Fahrzeugaufbau über den Achsen bis zum Ist-Niveau anhebt. Die Niveauregeleinrichtung kann auch als elektronische Niveauregeleinrichtung ausgebildet sein, bei der über Abstands-Messmittel das Ist-Niveau erfasst und über eine elektronische Steuereinrichtung elektrisch betätigbare Ventilmittel zur Veränderung der Luftmenge bzw. des Luftdrucks in dem mindestens einen Luftfederbalg der Anzeige-Fahrzeugachse vorgesehen sind. Auch hier wird die Luftmenge bzw. der Luftdruck derart eingestellt, dass das Ist-Niveau gleich dem Soll-Niveau wird.

Die Achslast-Gewichtskraft für einen Anzeige-Fahrzeugachse ist durch den Druck in den der Anzeige-Fahrzeugachse zugeordneten Luftfederbälgen festgelegt, wobei sie durch die wirksame Fläche (Summe der wirksamen Flächen aller Luftfederbälge für die Anzeige-Fahrzeugachse) dieser Luftfederbälge bestimmt ist.

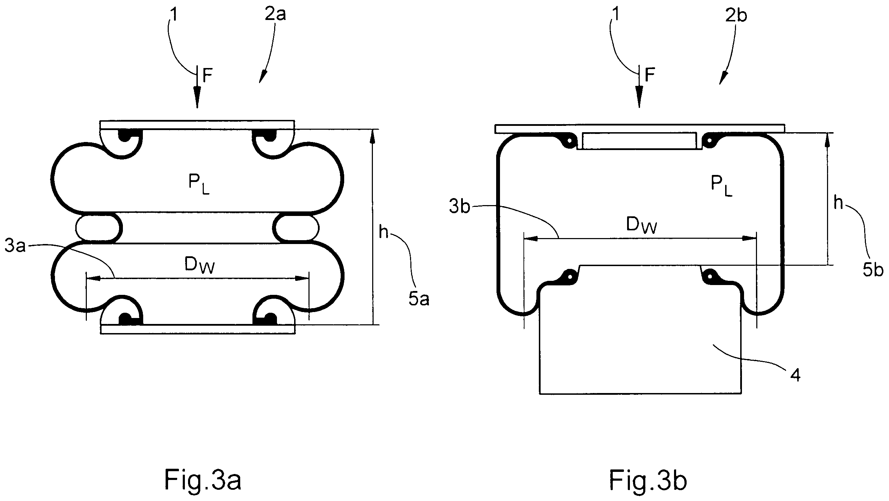

Die Erfindung wird im weiteren für das Beispiel einer Anzeige-Fahrzeugachse erläutert, für die ein einzelner Luftfederbalg (2) vorgesehen ist. Zwei typische Ausführungsformen von Luftfederbälgen sind in Fig. 3 gezeigt, Fig. 3a zeigt einen Luftfederbalg (2a) in der Ausführung als Faltenbalg, und Fig. 3b zeigt eine Ausführung als Rollbalg (2b); beide Luftfederbälge sind in einem Zustand gezeigt, in dem sie mit einer bestimmten Luftmenge zur Einhaltung des oben erläuterten Ist-Niveaus befüllt sind.

Mit der wirksamen Fläche $A_W$ dieses Luftfederbalgs in diesem Zustand und dem in diesem Zustand herrschenden Druck $p_L$ in den Luftfederbälgen ergibt sich für die Achslast-Gewichtskraft F(1):

$$F = A_W \cdot p_L \qquad [1]$$

(Anmerkung: bei mehreren Luftfederbälgen ist $A_W$ die Summe der wirksamen Flächen dieser Luftfederbälge)

Hierbei bestimmt sich die wirksame Fläche $A_W$ aus dem wirksamen Durchmesser $D_W$ (3a, 3b) des Luftfederbalgs:

$$A_W = \frac{\pi}{4} D_W^2 \qquad [2]$$

Wie dem Fachmann bekannt ist, ändert sich der wirksame Durchmesser $D_W$ (3) sowohl statisch mit der Höhe des Ist-Niveaus als auch dynamisch mit der Ein- und Ausfederung, ausgehend von einem gewählten Ist-Niveau (Balgfederkennlinie). Dass dieser Niveauhöheneinfluss für beide Balgtypen unterschiedlich ist, ist aus der Gegenüberstellung beider Balgtypen in Fig. 3 spontan ersichtlich; wie die Bezeichnung nahelegt, ändert sich beim Faltenbalg (2a) bei einer Niveauhöhenveränderung der Faltzustand, und damit der wirksame Durchmesser $D_W$ (3a), und beim Rollbalg (2b) wölbt sich der als biegeschlaffe Membran ausgebildete Rollbalg (2b) niveauhöhenabhängig über das Stützelement (4), so dass sich ebenfalls eine niveauhöhenabhängige Veränderung des wirksamen Durchmessers $D_W$ (3b) ergibt. Der Niveauhöhen-Einfluss auf den wirksamen Durchmesser $D_W$ (3) und damit auf die wirksame Fläche $A_W$ eines Luftfederbalgs (2) ist also vom Typ des Luftfederbalgs abhängig; die Erfindung ist für einen Niveauhöhen-Einfluss auf die wirksame Fläche eines Luftfederbalgs jeglicher Art anwendbar, auch muss die Art dieser Beeinflussung zur Anwendung der Erfindung gar nicht bekannt sein.

Wie erläutert, wird die Achslast-Gewichtskraft F (1) nach Formel [1] bestimmt; hierfür ist für das Ist-Niveau (5) ein bestimmtes Kalibrierniveau $h_o$ festgelegt, und für dieses Kalibrierniveau gibt es eine ganz bestimmte wirksame Fläche $A_{WO}$, die eine Kalibrierfläche darstellt. Für das Kalibrierniveau kann z. B. das normale Niveau des Fahrzeugs für die Fahrt gewählt werden; alternativ ist es z. B. auch möglich, das kleinste Ist-Niveau als Kalibrierniveau vorzusehen.

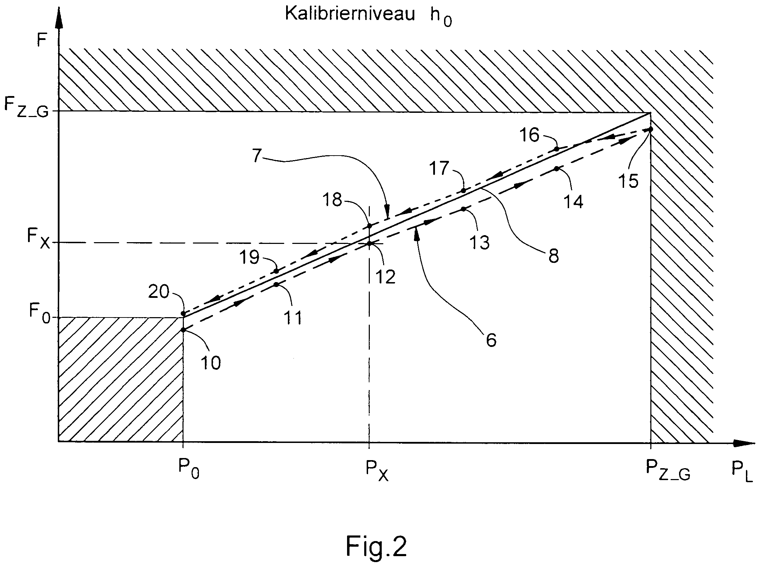

Die Erfindung geht von einer Achslastkennlinie für die Anzeige-Fahrzeugachse aus, nämlich einer Kennlinie, die die Achslast-Gewichtskraft F (1) über dem Balgdruck $p_L$ beschreibt. Eine derartige Achslastkennlinie kann unter Zugrundelegung der Kenndaten der verwendeten Luftfederbälge und der festgelegten mechanischen Abmessungen für die gewählte Konstruktion (im Wesentlichen die der Anlenkungen) von Achse und Fahrzeugaufbau rechnerisch ermittelt werden. Alternativ kann diese Achslastkennlinie auch messtechnisch erfasst werden, wie dies in der Zeichnung Fig. 2 dargestellt ist.

Zur messtechnischen Ermittlung der Achslastkennlinie wird das Fahrzeug auf eine Achslastwaage derart gefahren, dass die beiden Räder der Anzeige-Fahrzeugachse frei auf den linken und rechten Wägeplattformen der Achslastwaage stehen. Dann wird z. B. unter Verwendung eines Krans durch Auflegen von Last (z. B. von Beton-Gewichtsplatten) die Achslast stufenweise erhöht, und es wird für die Achslast jeder Stufe der Druck $p_L$ im Luftfederbalg (2) derart erhöht, dass sich das Kalibrierniveau $h_o$ einstellt. Die von der Achslastwaage ermittelte Achslast-Gewichtskraft F (1) und der Druck $p_L$ im Luftfederbalg werden, wie in Fig. 2 dargestellt, in das F-/$p_L$- Diagramm eingetragen.

Ausgehend von einem Druck $p_0$, dem minimalen Druck, bei dem ein Luftfederbalg gerade so weit befüllt ist, um seine mechanische Zerstörung zu verhindern und auf den in diesem Zustand vom Aufbau die kleinstmögliche

Achslast-Gewichtskraft $F_0$ ausgeübt wird, wird, im Beispiel nach Fig. 2, in fünf Schritten (11, 12, 13, 14, 15) die Last stufenweise erhöht und die Messpunkte $F_x$ der jeweils gemessenen Achslast-Gewichtskräfte werden über den entsprechend eingestellten Balgdrücken $p_x$ aufgetragen, so dass in der obersten Messstufe (15) das zulässige Gesamtgewicht für die Fahrzeugachse wirksam ist und dementsprechend auf den Luftfederbalg (2) mit dem maximal zulässigen Druck $p_{z\_G}$ die maximal zulässige Achslast-Gewichtskraft $F_{z\_G}$ einwirkt.

Die Verbindung dieser insgesamt 6 Messwerte (10, 11, 12, 13, 14, 15) ergibt in Fig. 2 den aus fünf Geradenstücken zusammengesetzten Achslast-Kennlinienzweig (6) für ansteigenden Druck (grob gestrichelt dargestellt mit Pfeil nach rechts oben).

Nach dieser stufenweisen Erhöhung wird die Last vorzugsweise aber nicht zwingend in Stufen gleicher Höhe (16, 17, 18, 19, 20) wieder erniedrigt, wodurch sich in gleicher Weise ein Kennlinienzweig (7) für abfallenden Druck ergibt (fein gestrichelt dargestellt mit Pfeil nach links unten), der aus Gründen der reibungsbedingten Hysterese in der Mechanik im Vergleich zum Kennlinienzweig (6) in Richtung höherer Achslast-Gewichtskräfte F verschoben ist.

Durch Mittelbildung aus dem Achslast-Kennlinienzweig (6) für ansteigenden Druck und dem Achslastkennlinienzweig (7) für abfallenden Druck ergibt sich die Achslastkennline (8) als Grundlage zur Bestimmung der Achslast-Gewichtskraft F (1) nach der Erfindung. Es sei ergänzt, dass das stufenweise Anheben (10 bis 15) und das stufenweise Absenken (16 bis 20) auch mehrfach durchgeführt werden kann, um Messfehler durch Hystereseeinflüsse auszumitteln und die Genauigkeit der Achslastkennlinie (8) zu erhöhen; natürlich können zur Genauigkeitserhöhung auch mehr als 5 Stufen gewählt werden, während bei verringerten Genauigkeitsanforderungen auch weniger als 5, z. B. 3 Stufen gewählt werden können.

Die Achslastkennlinie (8) als gemittelte Kennlinie zwischen den Kennlinienzweigen (6) und (7) stellt mit guter Näherung ein Geradenstück zwischen der kleinsten Kraft $F_0$ beim Druck $p_0$ und der maximal zulässigen Kraft $F_{z\_G}$ beim Druck $p_{z\_G}$ dar. Die Achslastkennlinie (8) ist durch die lineare Beziehung

$$F = F_0 + A_{WO} \cdot p_L \qquad [3]$$

beschrieben, in der eine Kalibrierfläche $A_{WO}$ die Steigung der Kennlinie darstellt; mit der Bestimmung der Achslastkennlinie (8) ist diese Kalibrierfläche $A_{WO}$ festgelegt, welche die wirksame Fläche der der Anzeige-Fahrzeugachse zugeordneten Luftfederbälge für den Fall darstellt, wenn das Ist-Niveau gleich dem Kalibrierniveau $h_0$ ist.

Für andere Niveauhöhen h als das Kalibrierniveau $h_0$ liegt statt der Kalibrierfläche $A_{WO}$ die wirksame Fläche $A_W$ vor, welche mit Hilfe einer Korrekturfunktion aus der Kalibrierfläche $A_{WO}$ bestimmt wird. Diese Kalibrierflächen-Korrekturfunktion k beschreibt die Abhängigkeit der wirksamen Fläche $A_W$ der der Anzeige-Fahrzeugachse zugeordneten Luftfederbälge von diesem aktuellen Ist-Niveau h des Fahrzeugaufbaus. Für die Korrektur der Kalibrierfläche $A_{WO}$ wird dann das aktuelle Ist-Niveau h in die Kalibrierflächen-Korrekturfunktion k eingesetzt.

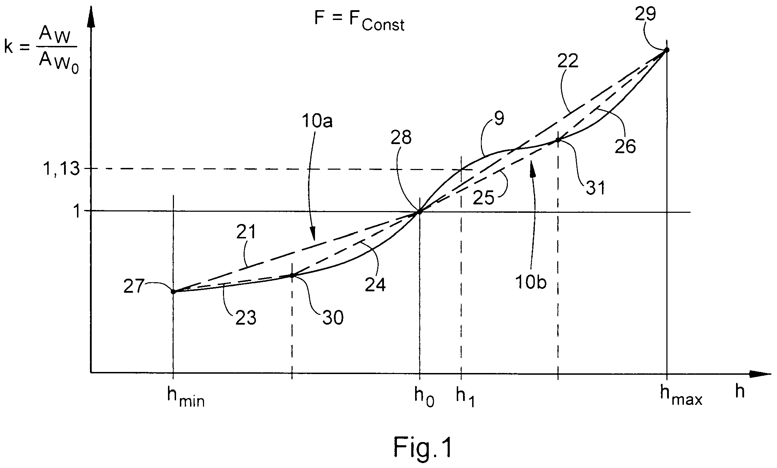

Wie in Fig. 1 dargestellt ist diese Kalibrierflächen-Korrekturfunktion k (9) vorteilhaft als Verhältnis der wirksamen Fläche $A_W$ der Luftfederbälge zur Kalibrierfläche $A_{W0}$ ausgebildet; auf der Ordinate ist die Korrekturfunktion k, und auf der Abszisse ist die Niveauhöhe h aufgetragen. Zur Verdeutlichung ist in Fig. 1 eine Kalibrierflächen-Korrekturfunktion k (9) mit vergleichsweise komplexem Niveauhöheneinfluss dargestellt.

Die Einführung der Kalibrierflächen-Korrekturfunktion k(h) in Gleichung [3] ergibt:

$$F = F_0 + A_{WO} \cdot p_L \cdot k(h) \qquad [4]$$

Da eine rechnerische Bestimmung des Niveauhöheneinflusses auf die wirksame Fläche eines Luftfederbalges wegen der vielen hierzu benötigten Einflussgrößen, die zunächst nicht bekannt sind, einerseits aufwendig ist und andererseits auch wegen der Nichtlinearitäten in diesen Einflussgrößen die Gefahr besteht, dass ein rechnerisch bestimmtes Ergebnis mit der Praxis nicht hinreichend im Einklang steht, wird die Korrekturflächen-Korrekturfunktion (9) nach Fig. 1 messtechnisch ermittelt.

Die einfachste Methode stellt hierbei die Ermittlung bei einer festen Last dar, d. h. bei Belastung der Anzeige-Fahrzeugachse mit einer festen Achslast-Gewichtskraft $F_{Const}$, für die z. B. die Hälfte der maximal zulässigen Achslast-Gewichtskraft $F_{z\_G}$ gewählt wird:

$$F = F_{Const} \qquad [5]$$

Durch Einsetzen von Gleichung [5] in Gleichung [4] ergibt sich für die Korrekturflächen-Korrekturfunktion k (h) :

$$k(h) = \frac{F_{Const} - F_0}{A_{W0} \cdot p_L} \qquad [6]$$

Zur Messung wird nach Beladung der Anzeige-Fahrzeugachse mit der festgelegten Last an der Anzeige-Fahrzeugachse zunächst das Kalibrierniveau $h_0$ eingestellt. Bei dieser Last wird nun, ausgehend von der Kalibrierhöhe $h_0$, durch Verringerung bzw. Erhöhung des Luftfederbalg-Drucks $p_L$ die Niveauhöhe einmal bis zur minimalen Höhe $h_{min}$ verringert und einmal bis zur maximalen Niveauhöhe $h_{max}$ erhöht; für jede eingestellte Niveauhöhe h wird der Luftfederbalg-Druck $p_L$ gemessen und mit Einsetzen dieses Drucks $p_L$ in Formel [6] ergibt sich der Wert k der Kalibrierflächen-Korrekturfunktion (9) nach Fig. 1 für diese aktuelle Niveauhöhe h. Die Verbindung aller so ermittelten Korrekturwerte k über der Niveauhöhe h ergibt die Kurve (9) der Kalibrierflächen-Korrekturfunktion nach Fig. 1.

Um den messtechnischen Aufwand zu verringern, kann die Kalibrierflächen-Korrekturfunktion (9) auch durch einen Polygonzug (10a bzw. 10b) aus Geradenabschnitten (21, 22 bzw. 23, 24, 25, 26) angenähert werden. Hierbei ist ein Geradenabschnitt durch einen ersten Stützpunkt eines Flächen-Kalibrierwerts an einem ersten Ist-Niveau und einen zweiten Stützpunkt eines Flächen-Kalibrierwerts an einem zweiten Ist-Niveau festgelegt, und für den Polygonzug ist mindestens ein Geradenabschnitt vorgesehen.

Für den Polygonzug (10a) nach Fig. 1 sind zwei Geradenabschnitte (21, 22) vorgesehen, wobei für den ersten Stützpunkt (27) des Flächen-Kalibrierwertes für den ersten Geradenabschnitt (21) die minimale Niveauhöhe $h_{min}$ und für den zweiten Stützpunkt (28) des Flächen-Kalibrierwertes (Zahlenwert "1") die Kalibrierhöhe $h_0$ gewählt ist. In vergleichbarer Weise ist für den ersten Stützpunkt (28) des Flächen-Kalibrierwertes des zweiten Geradenabschnitts (22) die Kalibrierhöhe $h_0$ und für den zweiten Stützpunkt des Flächen-Kalibrierwertes die maximale Niveauhöhe $h_{max}$ gewählt.

Da der Flächen-Kalibrierwert am Kalibrierniveau $h_0$ definitionsgemäß den Zahlenwert "1" hat, ist der vereinfachte Polygonzug (10a) mit den beiden Geradenabschnitten (21, 22) durch Messung des Luftfederbalg-Drucks an nur zwei weiteren Niveauhöhen, nämlich an der minimalen Niveauhöhe $h_{min}$ und an der maximalen Niveauhöhe $h_{max}$ bestimmbar. Weil die minimalen und maximalen Niveauhöhen Grenzlagen darstellen und ggf. nicht exakt einstellbar sind, kann statt ihrer auch ein Niveau im Bereich der minimalen bzw. maximalen Niveauhöhe $h_{min}$ bzw. $h_{max}$ eingestellt werden. Es sei darauf hingewiesen, dass für die minimalen und maximalen Niveauhöhen-Grenzlagen $h_{min}$ und $h_{max}$ noch der grundsätzliche Kraft-Druck-Zusammenhang nach Formel [1] gilt und dass die Werte für $h_{min}$ und $h_{max}$ als elektronisch gespeicherte Parameter zur Verfügung stellen. An den unteren und oberen Anschlägen gilt der Zusammenhang nach Formel [1] nicht mehr und daher weisen die Werte $h_{min}$ und $h_{max}$ zu den entsprechenden mechanischen Anschlägen einen erforderlichen, sich aus der Konstruktion ergebenden Sicherheitsabstand auf.

Für den Polygonzug (10b) der Kalibrierflächen-Korrekturfunktion nach Fig. 1 sind neben den Stützpunkten (27, 28, 29) der Flächen-Kalibrierwerte die beiden weiteren Stützpunkte (30 und 31) vorgesehen, deren aktuelle Niveauhöhen z. B. etwa in der Mitte der Bereiche zwischen der minimalen Niveauhöhe $h_{min}$ und der Kalibrierhöhe $h_0$ bzw. zwischen der Kalibrierhöhe $h_0$ und der maximalen Niveauhöhe $h_{max}$ liegen. Der Polygonzug ist daher aus den vier Geradenabschnitten (23, 24, 25, 26) gebildet und stellt im Vergleich zum Polygonzug (10a) eine bessere Annäherung dar. Beim Polygonzug (10b) ist also die Genauigkeit durch Einführung von lediglich zwei weiteren Stützpunkten verbessert und mit den insgesamt fünf Stützpunkten ist der Polygonzugs (10b) an eine Korrekturflächen-Korrekturfunktion (9) mit ihrem vergleichbar komplexen Niveauhöheneinfluss mit sehr guter Genauigkeit angenähert.

Alternativ zu der erläuterten Angabe einer Korrekturflächen-Korrekturfunktion als Abhängigkeit eines Flächen-Kalibrierwertes von einer Niveauhöhe entsprechend einem der Verläufe (9, 10a, 10b) nach Fig. 1 kann ein Zahlenwert eines korrigierten Flächen-Kalibrierwertes k(h) für mindestens ein aktuelles Ist-Niveau $h_1$ als vorausberechneter Wert $k_1$ gespeichert sein, der bei Vorlage dieses Ist-Niveaus zur Bestimmung der Achslast-Gewichtskraft nach Gleichung [4] zur Verfügung steht:

| $h_1$ | $k_1$ |
| --- | --- |

Dieses Ist-Niveau kann z. B. ein weiteres Normal-Fahrniveau darstellen. Wenn dieses weitere Fahrniveau z. B. die Niveauhöhe $h_1$ entsprechend Fig. 1 darstellt, so kann, wie bereits angedeutet, der diesem aktuellen Ist-Niveau entsprechende Flächen-Kalibrierwert $k_1$ direkt als Zahlenwert "1,13" abgespeichert sein.

Wird dann im Fahrbetrieb beim weiteren Normal-Fahrniveau $h_1$ in dem bzw. den zugeordneten Luftfederbälgen ein Druck von $p_{L\_akt}$ festgestellt, dann ergibt sich nach Anpassung von Gleichung [4] die angezeigte Achslast-Gewichtskraft für den Betriebsfall:

$$F = F_0 + A_{W0} \cdot p_{L\_akt} \cdot k_1 \qquad\qquad [7]$$

Zur Festlegung des korrigierten Flächen-Kalibrierwertes $k_1$ für das weitere Normal-Fahrniveau $h_1$ wird entsprechend dem oben beschriebenen messtechnischen Verfahren zur Ermittlung der Korrekturflächen-Korrekturfunktion, ausgehend von der Kalibrierhöhe $h_0$ im Zustand der mit der festgelegten Last beladenen Anzeige-Fahrzeugachse, der Luftfederbalg-Druck $p_L$ derart verändert, dass sich das weitere Normal-Fahrniveau $h_1$ einstellt, und dann wird nach der oben beschriebenen Methode der Flächen-Kalibrierwert $k_1$ nach Gleichung [6] bestimmt.

Es ist auch möglich, Flächen-Kalibrierwerte als vorausberechnete Werte für mehr als ein aktuelles Ist-Niveau zu speichern; diese weiteren Werte können z. B. Fahrniveaus oder Ladeniveaus für das Be- oder Entladen des Fahrzeugs an einer Rampe darstellen. Für einen solchen Fall ist es vorteilhaft, aus den entsprechenden Ist-Niveaus und den vorausberechneten Flächen-Kalibrierwerten eine Tabelle zu bilden und diese abzuspeichern:

| | |
|---|---|
| $h_0$ | 1 |
| $h_1$ | $k_1$ |
| $h_2$ | $k_2$ |
| $h_3$ | $k_3$ |
| $h_4$ | $k_4$ |

Die Bestimmung der Achslast für ein aktuelles Ist-Niveau $h_2$, $h_3$ oder $h_4$ erfolgt in analoger Weise zur oben erläuterten Bestimmung der Achslast-Gewichtskraft für das weitere Normal-Fahrniveau $h_1$ nach Gleichung [7] (Hinweis: Die in der Tabelle eingetragenen Flächen-Kalibrierwerte für die Ist-Niveaus $h_2$, $h_3$ und $h_4$ stellen lediglich Beispielwerte dar, die keinen funktionellen Zusammenhang zu den in Fig. 1 gezeigten Kurven (9, 10a, 10b) haben).

Wie dort gezeigt, ist die Tabelle vorteilhafterweise durch die Kalibrierhöhe $h_0$ mit dem hierzu gehörenden Flächen-Kalibrierwert, dem Zahlenwert "1" ergänzt, weil dann für alle anzufahrenden Niveauhöhen $h_0$, $h_1$, $h_2$, $h_3$ und $h_4$ die zugehörigen Flächen-Kalibrierwerte 1, $k_1$, $k_2$, $k_3$ und $k_4$ gespeichert sind.

Für jede angefahrene Niveauhöhe $h_x$ steht in der Tabelle jetzt der zugehörige Flächen-Kalibrierwert $k_x$, der zur Berechnung der Achslast-Gewichtskraft für den Betriebsfall (Druck $p_{L\_akt}$) ausgelesen und nach Formel [8] berechnet wird,

$$F = F_0 + A_{W0} \cdot p_{L\_akt} \cdot k_x \qquad\qquad [8]$$

zur Vefügung.

**Patentansprüche**

**1.** Vorrichtung einer Achslastanzeige für ein Fahrzeug mit einem gefederten Fahrzeugaufbau aufweisend eine Luftfederung und mindestens eine Fahrzeugachse mit mindestens einem Luftfederbalg (3a, 3b), welcher den Fahrzeugaufbau über der Fahrzeugachse abstützt, und eine Niveauregelungseinrichtung, durch welche ein Soll-Niveau, nämlich ein vorgegebener Abstand zwischen mindestens der Fahrzeugachse und dem Fahrzeugaufbau als Ist-Niveau eingehalten wird, wobei die Vorrichtung die auf die mindestens eine ausgewählte Fahrzeugachse wirkende Gewichtskraft anzeigt, und wobei die Vorrichtung eingerichtet ist:

- die durch eine Achslast-Gewichtskraft beschriebene Achslast durch den Druck ($p_L$) in den der Anzeige-Fahrzeugachse zugeordneten Luftfederbälgen (3a, 3b) und durch die wirksame Fläche ($A_W$) der der Anzeige-Fahrzeugachse zugeordneten Luftfederbälge (3a, 3b) zu bestimmen, und
- eine Kalibrierfläche ($A_{W0}$) für die wirksame Fläche ($A_W$) der der Anzeige-Fahrzeugachse zugeordneten Luftfederbälge (3a, 3b) vorzusehen, wobei die Kalibrierfläche ($A_{W0}$) als wirksame Fläche der der Anzeige-Fahrzeugachse zugeordneten Luftfederbälge (3a, 3b) bei einem Kalibrierniveau ($h_0$) als Ist-Niveau bestimmt wird,

**dadurch gekennzeichnet, dass**

die Kalibrierfläche ($A_{W0}$) durch eine Funktion (k) korrigiert wird, welche die Abhängigkeit der der Anzeige-Fahrzeugachse zugeordneten wirksamen Fläche (Aw) der Luftfederbälge (3a, 3b) vom aktuellen Ist-Niveau (h) des Fahrzeugaufbaus beschreibt, und zur Korrektur der Kalibrierfläche ($A_{W0}$) das aktuelle Ist-Niveau (h) in eine Kalibrierflächen-Korrekturfunktion eingesetzt wird.

2. Achslastanzeigevorrichtung nach Anspruch 1, **dadurch gekennzeichnet, dass** als Kalibrierniveau ($h_0$) ein Normal-Fahrniveau festgelegt ist.

3. Achslastanzeigevorrichtung nach Anspruch 1, **dadurch gekennzeichnet, dass** als Kalibrierniveau das kleinste Ist-Niveau ($h_{min}$) festgelegt ist.

4. Achslastanzeigevorrichtung nach Anspruch 1, **dadurch gekennzeichnet, dass** ein zur Korrektur vorgesehener Flächen-Kalibrierwert ($k_1$) für mindestens ein aktuelles Ist-Niveau ($h_1$) als ein vorausberechneter Wert gespeichert ist und bei Vorlage dieses Ist-Niveaus zur Bestimmung der Achslast-Gewichtskraft zur Verfügung steht.

5. Achslastanzeigevorrichtung nach Anspruch 4, **dadurch gekennzeichnet, dass** ein zur Korrektur vorgesehener Flächen-Kalibrierwert ($k_2$) für ein weiteres Normal-Fahrniveau ($h_2$) als vorausberechneter Wert gespeichert ist.

6. Achslastanzeigevorrichtung nach Anspruch 4, **dadurch gekennzeichnet, dass** aus mehr als einem zur Korrektur vorgesehenen und vorausberechneten Flächen-Kalibrierwerte ($k_1$, $k_2$, $k_3$, $k_4$) und den entsprechenden aktuellen Ist-Niveaus ($h_1$, $h_2$, $h_3$, $h_4$) eine Tabelle gebildet und gespeichert ist.

7. Achslastanzeigevorrichtung nach Anspruch 1, **dadurch gekennzeichnet**, die Kalibrierflächen-Korrekturfunktion (k, 9) durch das Verhältnis der wirksamen Fläche ($A_W$) der Luftfederbälge im aktuellen Ist-Niveau (h) zur Kalibrierfläche ($A_{W0}$) im Kalibrierniveau ($h_0$) bestimmt ist.

8. Achslastanzeigevorrichtung nach Anspruch 7, **dadurch gekennzeichnet, dass** die Kalibrierflächen-Korrekturfunktion (k) als aus Geradenabschnitten gebildeter Polygonzug (10a, 10b) ausgebildet ist, wobei ein Geradenabschnitt (21) durch einen ersten Stützpunkt (27) eines Flächen-Kalibrierwertes an einem ersten Ist-Niveau ($h_{min}$) und einen zweiten Stützpunkt (28) eines Flächen-Kalibrierwertes an einem zweiten Ist-Niveau ($h_0$) festgelegt ist, welche den Geradenabschnitt (21) begrenzen, und im Polygonzug mindestens ein Geradenabschnitt (21) vorgesehen ist.

9. Achslastanzeigevorrichtung nach Anspruch 8, **dadurch gekennzeichnet, dass** für den Polygonzug (10a) zwei Geradenabschnitte, ein erster (21) und ein zweiter (22) Geradenabschnitt, vorgesehen sind, wobei für den ersten Geradenabschnitt (21) ein Ist-Niveau im Bereich des kleinsten Ist-Niveaus ($h_{min}$) für den ersten Stützpunkt (27) und das Kalibrierniveau ($h_0$) für den zweiten Stützpunkt (28) festgelegt sind, und wobei für den zweiten Geradenabschnitt (22) das Kalibrierniveau ($h_0$) für den ersten Stützpunkt (28) und ein Ist-Niveau im Bereich des größten Ist-Niveaus ($h_{max}$) für den zweiten Stützpunkt (29) festgelegt sind.

**Claims**

1. Device for displaying the axle load for a vehicle having a sprung vehicle body, having an air suspension and at least one vehicle axle with at least one air spring bellows (3a, 3b) which supports the vehicle body above the vehicle axle, and a ride level control device, by means of which a setpoint ride level, specifically a predefined distance between at least the vehicle axle and the vehicle body is maintained as an actual ride level, wherein the device displays the weight force acting on the at least one selected vehicle axle, and wherein the device is configured:

   - to determine axle load, described by an axle load weight force, by means of the pressure ($p_L$) in the air spring bellows (3a, 3b) which are assigned to the display vehicle axle, and by means of the effective area ($A_W$) of the air spring bellows (3a, 3b) which are assigned to the display vehicle axle, and
   - to provide a calibration area ($A_{W0}$) for the effective area ($A_W$) of the air spring bellows (3a, 3b) which are assigned to the display vehicle axle, wherein the calibration area ($A_{W0}$) as the effective area of the air spring bellows (3a, 3b) which are assigned to the display vehicle axle is determined as an actual ride level in the case of a calibration ride level ($h_0$),

   **characterized in that**
   the calibration area ($A_{W0}$) is corrected by means of a function (k) which describes the dependence of the effective area ($A_W$), assigned to the display vehicle axle, of the air spring bellows (3a, 3b) on the current actual ride level (h) of the vehicle body, and the current actual ride level (h) is used in a calibration area correction function for correcting the calibration area ($A_{W0}$).

2. Axle load display device according to Claim 1, **characterized in that** a normal ride level is defined as a calibration ride level ($h_0$).

3. Axle load display device according to Claim 1, **characterized in that** the minimum actual ride level ($h_{min}$) is defined as the calibration ride level.

4. Axle load display device according to Claim 1, **characterized in that** an area calibration value ($k_1$) which is provided for the purpose of correction is stored for at least one current actual ride level ($h_1$) as a pre-calculated value, and is available for determining the axle load weight force when this actual ride level is present.

5. Axle load display device according to Claim 4, **characterized in that** an area calibration value ($k_2$) which is provided for the purpose of correction is stored as a pre-calculated value for a further normal ride level ($h_2$).

6. Axle load display device according to Claim 4,
   **characterized in that** a table is formed from more than one pre-calculated area calibration value ($k_1$, $k_2$, $k_3$, $k_4$), provided for the purpose of correction, and the corresponding current actual ride levels ($h_1$, $h_2$, $h_3$, $h_4$), and stored.

7. Axle load display device according to Claim 1,
   **characterized in that** the calibration area correction function (k, 9) is determined by the ratio of the effective area ($A_W$) of the air spring bellows in the current actual ride level (h) to the calibration area ($A_{W0}$) in the calibration ride level ($h_0$).

8. Axle load display device according to Claim 7,
   **characterized in that** the calibration area correction function (k) is embodied as a polygon (10a, 10b) which is formed from straight-line sections, wherein a straight-line section (21) is provided by a first reference point (27) of an area calibration value at a first actual ride level ($h_{min}$) and a second reference point (28) of an area calibration value at a second actual ride level ($h_0$), which reference points (27, 28) delimit the straight-line section (21), and at least one straight-line section (21) is provided in the polygon.

9. Axle load display device according to Claim 8,
   **characterized in that** two straight-line sections, a first straight-line section (21) and a second straight-line section (22) are provided for the polygon (10a), wherein for the first straight-line section (21) an actual ride level is defined in the region of the minimum actual ride level ($h_{min}$) for the first reference point (27), and the calibration ride level ($h_0$) is defined for the second reference point (28), and wherein for the second straight-line section (22) the calibration ride level ($h_0$) is defined for the first reference point (28), and an actual ride level is defined in the region of the maximum actual ride level ($h_{max}$) for the second reference point (29).

**Revendications**

1. Dispositif pour l'indication de la charge à l'essieu pour un véhicule avec une superstructure de véhicule suspendue, présentant une suspension pneumatique et au moins un essieu de véhicule avec au moins un soufflet de suspension pneumatique (3a, 3b), qui soutient la superstructure de véhicule au-dessus de l'essieu de véhicule, et un système de régulation de niveau, par lequel un niveau de consigne, à savoir une distance prédéterminée entre au moins l'essieu de véhicule et la superstructure de véhicule est respecté en tant que niveau réel, dans lequel le dispositif indique la charge pondérale agissant sur ledit au moins un essieu de véhicule choisi, et dans lequel le dispositif est conçu pour:

   - déterminer la charge d'essieu décrite comme la force pondérale de charge d'essieu par la pression ($p_L$) dans les soufflets de suspension pneumatique (3a, 3b) associés à l'essieu de véhicule indiqué et par la surface utile ($A_W$) des soufflets de suspension pneumatique (3a, 3b) associés à l'essieu de véhicule indiqué, et
   - prévoir une face de calibrage ($A_{W0}$) pour la face utile ($A_W$) des soufflets de suspension pneumatique (3a, 3b) associés à l'axe de véhicule indiqué, dans lequel la face de calibrage ($A_{W0}$) est déterminée comme étant la face utile des soufflets de suspension pneumatique (3a, 3b) associés à l'essieu de véhicule indiqué pour un

niveau de calibrage ($h_0$) comme niveau réel,

**caractérisé en ce que**
la face de calibrage ($A_{W0}$) est corrigée par une fonction (k), qui décrit la relation de dépendance entre la face utile ($A_W$) des soufflets de suspension pneumatique (3a, 3b) associés à l'essieu de véhicule indiqué et le niveau réel actuel (h) de la superstructure de véhicule, et pour la correction de la face de calibrage ($A_{W0}$) on introduit le niveau réel actuel (h) dans une fonction de correction de face de calibrage.

2. Dispositif indicateur de la charge à l'essieu
selon la revendication 1, **caractérisé en ce que** l'on définit un niveau de marche normal comme niveau de calibrage ($h_0$).

3. Dispositif indicateur de la charge à l'essieu
selon la revendication 1, **caractérisé en ce que** l'on définit le niveau réel le plus petit ($h_{min}$) comme niveau de calibrage.

4. Dispositif indicateur de la charge à l'essieu
selon la revendication 1, **caractérisé en ce qu'**une valeur de calibrage de face ($k_1$) prévue pour la correction pour au moins un niveau réel actuel ($h_1$) est stockée en tant que valeur pré-calculée et est disponible en cas de prescription de ce niveau réel pour la détermination de la force pondérale de charge d'essieu.

5. Dispositif indicateur de la charge à l'essieu
selon la revendication 4, **caractérisé en ce qu'**une valeur de calibrage de face ($k_2$) prévue pour la correction pour un autre niveau de marche normal ($h_2$) est stockée en tant que valeur pré-calculée.

6. Dispositif indicateur de la charge à l'essieu
selon la revendication 4, **caractérisé en ce qu'**un tableau est formé et stocké à partir de plus d'une valeur de calibrage de face prévue pour la correction et pré-calculée ($k_1$, $k_2$, $k_3$, $k_4$) et des niveaux réels actuels correspondants ($h_1$, $h_2$, $h_3$, $h_4$).

7. Dispositif indicateur de la charge à l'essieu
selon la revendication 1, **caractérisé en ce que** la fonction de correction de face de calibrage (k, 9) est déterminée par le rapport entre la face utile ($A_W$) des soufflets de suspension pneumatique au niveau réel actuel (h) et la face de calibrage ($A_{W0}$) au niveau de calibrage ($h_0$).

8. Dispositif indicateur de la charge à l'essieu
selon la revendication 7, **caractérisé en ce que** la fonction de correction de face de calibrage (k) est construite sous la forme d'une ligne polygonale (10a, 10b) formée de segments de droite, dans lequel un segment de droite (21) est défini par un premier point d'appui (27) d'une valeur de calibrage de face à un premier niveau réel ($h_{min}$) et un deuxième point d'appui (28) d'une valeur de calibrage de face à un deuxième niveau réel ($h_0$), qui limitent le segment de droite (21), et il est prévu dans la ligne polygonale au moins un segment de droite (21).

9. Dispositif indicateur de la charge à l'essieu
selon la revendication 8, **caractérisé en ce qu'**il est prévu pour la ligne polygonale (10a) deux segments de droite, un premier (21) et un deuxième (22) segments de droite, dans lequel pour le premier segment de droite (21) un niveau réel dans la région du plus petit niveau réel ($h_{min}$) est défini pour le premier point d'appui (27) et le niveau de calibrage ($h_0$) est défini pour le deuxième point d'appui (28), et dans lequel pour le deuxième segment de droite (22) le niveau de calibrage ($h_0$) est défini pour le premier point d'appui (28) et un niveau réel dans la région du plus grand niveau réel ($h_{max}$) est défini pour le deuxième point d'appui (29).

$$k = \frac{A_W}{A_{W_0}}$$

$F = F_{Const}$

Fig.1

EP 1 571 429 B1

Fig.2

EP 1 571 429 B1

Fig.3b

Fig.3a

13

**EP 1 571 429 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0666468 B1
- DE 3906987 C2
- US 4651838 A
- WO 200176897 A1
- JP 04161827A A
- EP 1167094 A1